# EUROPEAN PATENT SPECIFICATION

(11) **EP 4 693 529 B1**
(45) Date of publication and mention of the grant of the patent: **02.12.2026**
(21) Application number: 24780244.0
(22) Date of filing: 26.03.2024
(51) Int. Cl.: H01M 4/96, D01F 9/12, H01M 4/86, H01M 8/10, D04H 1/4242, D04H 1/43, D04H 1/64, D04H 1/645, D04H 1/732, D21H 13/50

(54) **CARBON FIBER SHEET, GAS DIFFUSION ELECTRODE BASE MATERIAL, MEMBRANE ELECTRODE ASSEMBLY, AND FUEL CELL**
KOHLENSTOFFFASERFOLIE, BASISMATERIAL FÜR GASDIFFUSIONSELEKTRODE, MEMBRANELEKTRODENANORDNUNG UND BRENNSTOFFZELLE
FEUILLE DE FIBRES DE CARBONE, MATÉRIAU DE BASE D'ÉLECTRODE DE DIFFUSION DE GAZ, ENSEMBLE ÉLECTRODE À MEMBRANE, ET PILE À COMBUSTIBLE

(30) Priority: 29.03.2023 JP 2023053077
(43) Date of publication of application: 11.02.2026
(73) Proprietor: Toray Industries, Inc., Tokyo, 103-8666 (JP)
(72) Inventor: SODE, Katsuya, Otsu-shi, Shiga 520-8558 (JP); CHIDA, Takashi, Iyo-gun, Ehime 791-3193 (JP); WAKATABE, Michio, Otsu-shi, Shiga 520-2141 (JP); IKETANI, Hidekazu, Iyo-gun, Ehime 791-3193 (JP)
(74) Representative: Prüfer & Partner mbB Patentanwälte · Rechtsanwälte
(86) International application number: PCT/JP2024/011827
(87) International publication number: WO 2024/204130

(56) References cited:
- WO-A1-2016/060044
- CA-A1- 3 215 709
- JP-A- 2001 196 071
- JP-A- 2006 143 478
- JP-A- 2017 202 948
- JP-A- 2018 181 715
- US-A1- 2017 244 108
- US-A1- 2019 006 682

## Description

### Technical Field

The present invention relates to a carbon fiber sheet, a gas diffusion electrode substrate, a membrane electrode assembly, and a fuel cell. More particularly, the present invention relates to a carbon fiber sheet and a gas diffusion electrode, which can be preferably used in electrochemical units using a porous electrode that requires electrical conduction and gas diffusion or liquid passing. Examples of such electrochemical units include fuel cells, water electrolysis cells, redox flow batteries, and air batteries, and the carbon fiber sheet and the gas diffusion electrode can be particularly preferably used in polymer electrolyte fuel cells. The present invention also relates to a membrane electrode assembly and a fuel cell in which the above-described carbon fiber sheet or gas diffusion electrode substrate is used.

### Background Art

Polymer electrolyte fuel cells, in which a hydrogen-containing fuel gas and an oxygen-containing oxidizing gas are supplied to an anode and a cathode, respectively, and an electromotive force is generated by electrochemical reactions occurring at both electrodes, are generally constructed by laminating a separator, a gas diffusion electrode, a catalyst layer, an electrolyte membrane, a catalyst layer, a gas diffusion electrode, and a separator in the order mentioned. The gas diffusion electrodes are required to have high gas diffusivity for allowing a gas supplied from the respective separators to diffuse into the catalyst layers, high water removability for discharging water generated by the electrochemical reactions to the separators, and high electrical conductivity for extraction of generated electric current. Further, as the operating temperatures of such polymer electrolyte fuel cells have been rising in recent years, there is a demand for carbon fiber sheets having low electrical and thermal resistance.

However, a carbon fiber sheet having low electrical and thermal resistance poses the following problems: (1) the need for increasing the areal weight for the formation of electrical and thermal conduction paths, which leads to an increase in raw material cost; and (2) insufficiency in other required properties, such as spring property and settling property. Therefore, there is a demand for realizing a carbon fiber sheet that has a low production cost, achieves both high spring property and excellent settling property, and exhibits low electrical and thermal resistance.

Accordingly, for example, a carbon fiber sheet having low electrical and thermal resistance, which can be produced by laminating and thermally molding plural carbon fiber sheet precursors and subsequently heat-treating the resultant at a high temperature for an extended period, has been proposed (Patent Literature 1).

Further, a carbon fiber sheet having low electrical and thermal resistance, in which a large amount of graphite is added as an electrically conductive filler to a carbon fiber sheet precursor, has been proposed (Patent Literature 2).

Moreover, a carbon fiber sheet having low electrical and thermal resistance, in which a pulp is mixed into a carbon fiber sheet precursor, has been proposed (Patent Literature 3).

### Citation List

### Patent Literature

[Patent Literature 1] JP H9-157052A
[Patent Literature 2] JP 2007-40040A
[Patent Literature 3] JP 2011-195374A

Other prior art can be found in CA 3 215 709 A1; US 2017/244108A1; US 2019/006682 A1; and JP 2006 143478 A.

### Summary of Invention

### Technical Problem

However, in the invention disclosed in Patent Literature 1, since it is necessary to perform a heat treatment for an extended period, the problem of high production cost remains to be solved. In addition, in the invention disclosed in Patent Literature 2, since the amount of the electrically conductive filler is extremely large, the problem of insufficient compression strength and insufficient settling property due to weak bonding between the carbon fibers in the carbon fiber sheet remains to be solved. Further, in the invention disclosed in Patent Literature 3, since the gases generated by decomposition of the contained pulp by high-temperature annealing need to be processed, the problem of high production cost remains to be solved.

### Solution to Problem

In order to solve the above-described problems, the present invention has the following constitution.
(1) A carbon fiber sheet, including carbon fibers and a bonding material,
   wherein
   a proportion of a region occupied by the bonding material having a cross-sectional area larger than 10 times the cross-sectional area of the carbon fibers is 40% by volume or more of the volume of the entire carbon fiber sheet,
   in a section ranging from a plane that has a 50% filling rate and is closest to one surface to a plane that has a 50% filling rate and is closest to the other surface, with regard to layers obtained by dividing the carbon fiber sheet into three equal parts in a through-plane direction by planes parallel to the one surface, when, of the layers close to the respective surfaces, a layer having a higher layer filling rate and a layer having a lower layer filling rate are defined as layer X and layer Y, respectively, while the layer positioned between the layers X and Y is defined as layer Z, the layer Z has the highest layer filling rate and a ratio Z/Y of the layer filling rates of the layers Y and Z is 1.8 or lower,
   the 50% filling rate is a value obtained by measuring the plane filling rate at thickness intervals of one-third of the carbon fiber diameter from one surface of the carbon fiber sheet toward the other surface, subsequently determining an average value of the thus measured plane filling rates, and then calculating 50% of this average value, and
   the layer filling rate is an average filling rate of planes forming each layer.
(2) The carbon fiber sheet according to (1), wherein the difference in layer filling rate between the layer Y and the layer Z is 15% or less.
(3) The carbon fiber sheet according to (1) or (2), having an open pore volume ratio, which is defined as a ratio of the volume of open pores having a pore size of 0.5 µm or more but less than 10 µm with respect to the volume of open pores having a pore size of 10 µm to 100 µm, of 0.02 to 0.20.
(4) The carbon fiber sheet according to any one of (1) to (3), having a spring property during compression of 4 µm or more and a settling property during compression of 10% or less.
(5) The carbon fiber sheet according to any one of (1) to (4), wherein the bonding material contains an electrically conductive filler having an aspect ratio of 20 to 60 and an average particle size of 2 µm to 8 µm.
(6) The carbon fiber sheet according to any one of (1) to (5), composed of a single-layer sheet.
(7) The carbon fiber sheet according to any one of (1) to (6), containing only carbon fibers as a fibrous material.
(8) A gas diffusion electrode substrate, including the carbon fiber sheet according to any one of (1) to (7).
(9) The gas diffusion electrode substrate, wherein a hydrophobic treatment has been performed on athe carbon fiber sheet.
(10) The gas diffusion electrode substrate according to (8), wherein a microporous layer is formed on at least one surface of the carbon fiber sheet according to any one of (1) to (7).
(11) A membrane electrode assembly, including the carbon fiber sheet according to any one of (1) to (7) or the gas diffusion electrode substrate according to (8).
(12) A fuel cell, including the membrane electrode assembly according to (11). Advantageous Effects of Invention

According to the present invention, a carbon fiber sheet that has a low production cost, achieves both high spring property and excellent settling property, and exhibits low electrical resistance, which was previously difficult to obtain, can be obtained.

### Brief Description of Drawings

[FIG. 1] FIG. 1 is a schematic cross-sectional view for describing surfaces A, B, and C in the three-dimensional structure of the carbon fiber sheet of the present invention.
[FIG. 2] FIG. 2 is a schematic cross-sectional view taken from the surface B side of the structure of the carbon fiber sheet of the present invention.
[FIG. 3] FIG. 3 is a cross-sectional view of the carbon fiber sheet of the present invention.
[FIG. 4] FIG. 4 is a schematic view for describing cross-sections B1 and Bn in the three-dimensional structure of the carbon fiber sheet of the present invention.
[FIG. 5] FIG. 5 is a schematic view for describing cross-sections C1 and Cn in the three-dimensional structure of the carbon fiber sheet of the present invention.

### Description of Embodiments

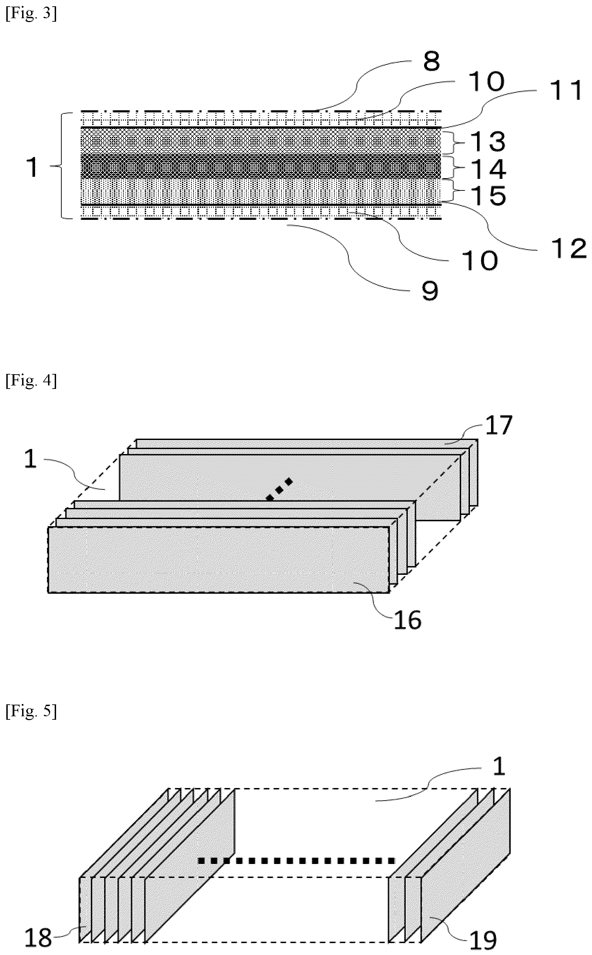

Referring to FIG. 3, in the carbon fiber sheet of the present invention which is a carbon fiber sheet 1 including carbon fibers and a bonding material, a proportion of a region occupied by the bonding material having a cross-sectional area larger than 10 times the cross-sectional area of the carbon fibers is 40% by volume or more of the volume of the entire carbon fiber sheet and, in a section ranging from a plane 11 that has a 50% filling rate and is closest to one surface 8 to a plane 12 that has a 50% filling rate and is closest to the other surface 9, with regard to layers obtained by dividing the carbon fiber sheet 1 into three equal parts in a through-plane direction by planes parallel to the one surface 8, when, of the layers close to the respective surfaces, a layer having a higher layer filling rate and a layer having a lower layer filling rate are defined as layer X13 and layer Y15, respectively, while the layer positioned between the layers X13 and Y15 is defined as layer Z14, the layer Z14 has the highest layer filling rate and a ratio Z/Y of the layer filling rates of the layers Y15 and Z14 is 1.8 or lower. It is noted here that the "50% filling rate" refers to a value obtained by measuring the plane filling rate at thickness intervals of one-third of the carbon fiber diameter from one surface 8 of the carbon fiber sheet toward the other surface 9, subsequently determining an average value of the thus measured plane filling rates, and then calculating 50% of this average value. Further, the "layer filling rate" refers to an average filling rate of planes forming each layer.

The carbon fiber sheet, the gas diffusion electrode, the membrane electrode assembly, and the fuel cell according to the present invention will now be described in detail.

### [Carbon Fiber Sheet]

The carbon fiber sheet of the present invention includes carbon fibers and a bonding material. The bonding material is a component other than the carbon fibers contained in the carbon fiber sheet, which component plays a role in bonding the carbon fibers with each other, and examples thereof include a carbide of a resin composition.

In order to obtain the carbon fiber sheet of the present invention, it is preferred to use a carbon fiber porous material containing carbon fibers. As the carbon fiber porous material, for example, a carbon fiber papermaking substrate, a carbon fiber woven fabric, or a carbon fiber nonwoven fabric can be used; however, a carbon fiber papermaking substrate is preferred because it has an excellent property of absorbing dimensional changes in the thickness direction of an electrolyte membrane, i.e. "spring property". In other words, it is a preferred aspect to use a carbon paper, which is obtained by bonding carbon fiber papermaking substrates with a bonding material, as the carbon fiber sheet.

Examples of the carbon fibers used in the present invention include polyacrylonitrile (PAN)-based carbon fibers, pitch-based carbon fibers, and rayon-based carbon fibers. Thereamong, PAN-based carbon fibers or pitch-based carbon fibers are preferably used because of their excellent mechanical strength.

The carbon fibers of the present invention preferably have a monofilament average diameter in a range of 3 to 20 µm, more preferably in a range of 5 to 10 µm. When the monofilament average diameter is 3 µm or more, the diameter of the pores in the carbon fiber sheet is large and the water removability is improved, so that flooding is likely to be inhibited. Meanwhile, when the monofilament average diameter is 20 µm or less, the thickness of the carbon fiber sheet can be easily controlled to be in the below-described preferred range, which is preferred.

When a carbon fiber papermaking substrate is used as the carbon fiber porous material, the carbon fibers used in the carbon fiber papermaking substrate preferably have a monofilament average length in a range of 3 to 20 mm, more preferably in a range of 5 to 15 mm. When the monofilament average length is 3 mm or more, a carbon fiber sheet excellent in mechanical strength, electrical conductivity, and thermal conductivity can be obtained. Meanwhile, when the monofilament average length is 20 mm or less, the carbon fibers have excellent dispersibility in papermaking, so that a homogeneous carbon fiber sheet can be obtained.

The average diameter and the average length of monofilaments in the carbon fibers, as well as the below-described cross-sectional area of the carbon fibers, are usually measured by directly observing the carbon fibers used as a raw material; however, they can also be measured by observing the carbon fiber sheet.

In the carbon fiber porous material, natural fibers such as pulp or synthetic fibers may be mixed as fibers other than the carbon fibers; however, this may lead to an increase in the amount of decomposition gas released from the fibers other than the carbon fibers during baking. By using a carbon fiber porous material that does not contain fibers other than the carbon fibers, not only an increase in the production cost due to an increase in the amount of decomposition gas can be inhibited, but also the distribution of the resin composition in the below-described prepreg can be easily controlled, so that it is made easier to realize the structure of the present invention. However, flame retardant threads made of polyacrylonitrile or the like, which are carbon fiber precursors, generate only a small amount of decomposition gas, and can thus be suitably used as fibers other than the carbon fibers that are mixed into the carbon fiber porous material.

When a carbon fiber papermaking substrate is used as the carbon fiber porous material, for the purpose of maintaining the in-plane electrical conductivity and thermal conductivity to be isotropic, the carbon fiber papermaking substrate is preferably in the form of a sheet in which carbon fibers are randomly dispersed in a two-dimensional plane.

Papermaking of the carbon fibers for the preparation of the carbon fiber papermaking substrate may be performed only once, or may be performed multiple times by lamination; however, in order to prevent internal delamination of the carbon fiber sheet, it is a preferred aspect to form the carbon fiber sheet continuously in a single process. When the carbon fiber sheet is formed as a thick sheet by a method in which a papermaking process or the like is performed multiple times, discontinuous planes are formed in the thickness direction, and this may cause internal delamination due to concentration of stress when the carbon fiber sheet is bent.

The bonding material contained in the carbon fiber sheet of the present invention is preferably a carbonized resin, and the carbonized resin may contain a filler. It is particularly preferred that the carbonized resin contain an electrically conductive filler such as carbon powder as the filler, since this can reduce the electrical and thermal resistance of the carbon fiber sheet.

Examples of the carbon powder that can be used include: carbon blacks such as furnace black, acetylene black, lamp black, and thermal black: graphites such as flake graphite, scaly graphite, earthy graphite, artificial graphite, expanded graphite, and thin-flake graphite; carbon nanotubes; linear carbon; and milled carbon fibers. The bonding material constituting the carbon fiber sheet of the present invention preferably contains an electrically conductive filler having an aspect ratio of 20 to 60 and an average particle size of 2 µm to 8 µm. By incorporating such an electrically conductive filler, the distribution of the filling rate in the carbon fiber sheet can be adjusted, and open pores can be formed more effectively. This enables to realize the carbon fiber sheet of the present invention in a wide range of material formulations of carbon fiber sheet. When the average particle size of the electrically conductive filler is larger than 8 µm or the aspect ratio of the electrically conductive filler is higher than 60, there are cases where the electrically conductive filler cannot be uniformly adhered to the carbon fiber porous material in the production of the below-described prepreg. Meanwhile, when the average particle size of the electrically conductive filler is smaller than 2 µm or the aspect ratio of the electrically conductive filler is lower than 20, there are cases where open pores cannot be formed due to dense aggregation of particles. The aspect ratio of the electrically conductive filler can be determined by observing the graphite particles in a magnified state under a scanning electron microscope. In a magnified image, when the length of each graphite particle in the long axis direction (the length of the longest line segment among the line segments connecting two points on the circumference of the graphite particle in the image) is defined as "a" and the length in the short axis direction (the length of the longest line segment among the line segments that connect two points on the circumference of the graphite particle and are perpendicular to the long axis direction in the image that) is defined as "b", the value of a/b is measured for 50 arbitrary graphite particles, and an average value thereof is defined as the aspect ratio in the present invention. In the case of a shape that is deemed to be of a thin sheet as in flake graphite, the length a in the long axis direction is paraphrased as "long-axis length in a plane perpendicular to the thickness direction", while the length b in the short axis direction is paraphrased as "thickness".

The carbon fiber sheet of the present invention includes a region occupied by the bonding material having a cross-sectional area larger than 10 times the cross-sectional area of the carbon fibers. By incorporating a region occupied by the bonding material having a cross-sectional area larger than 10 times the cross-sectional area of the carbon fibers, the carbon fibers can be firmly bonded together, so that the carbon fiber sheet is provided with excellent settling property.

In the carbon fiber sheet of the present invention, a proportion of the region occupied by the bonding material having a cross-sectional area larger than 10 times the cross-sectional area of the carbon fibers is 40% by volume or more with respect to the volume of the entire carbon fiber sheet. By controlling the proportion of the region occupied by the bonding material having a cross-sectional area larger than 10 times the cross-sectional area of the carbon fibers to be 40% by volume or more with respect to the volume of the entire carbon fiber sheet, a conduction path can be formed between bonding materials, so that the carbon fiber sheet is provided with low electrical resistance. When the proportion of the region occupied by the bonding material having a cross-sectional area larger than 10 times the cross-sectional area of the carbon fibers is 60% by volume or more with respect to the volume of the entire carbon fiber sheet, a conduction path is formed firmly, so that the carbon fiber sheet can be provided with lower electrical and thermal resistance, which is preferred. Meanwhile, when the proportion of the region occupied by the bonding material having a cross-sectional area larger than 10 times the cross-sectional area of the carbon fibers is 90% by volume or less, the gas diffusivity required for the carbon fiber sheet is likely to be obtained, which is preferred. In other words, the proportion of the region occupied by the bonding material having a cross-sectional area larger than 10 times the cross-sectional area of the carbon fibers is preferably 60 to 90% by volume with respect to the volume of the entire carbon fiber sheet.

The cross-sectional area of the bonding material is verified in the below-described X-ray CT image. In the image, when the cross-sectional area of a part where the bonding material is continuous is deemed as the cross-sectional area of the bonding material, the ratio of a region occupied by the bonding material having a cross-sectional area larger than 10 times the cross-sectional area of the carbon fibers with respect to the volume of the entire carbon fiber sheet is defined as the proportion of the region occupied by the bonding material having a cross-sectional area larger than 10 times the cross-sectional area of the carbon fibers. It is noted here that a region occupied by the bonding material having a cross-sectional area that is 10 times or less the cross-sectional area of the carbon fibers is not included in the cross-sectional area of the bonding material. Further, the "cross-sectional area of the carbon fibers" means the area of a cross-section perpendicular to the longitudinal direction of the respective carbon fibers. At a cross-section of the carbon fiber sheet, there exists the carbon fibers and the bonding material as well as the bonding material enclosing the carbon fibers, and all of the regions where these components have a cross-sectional area larger than 10 times the cross-sectional area of the carbon fibers are regarded as the bonding material having a cross-sectional area larger than 10 times the cross-sectional area of the carbon fibers. The bonding material adheres to the carbon fibers, and the carbon fibers are enclosed in the bonding material to form a composite structure; therefore, the carbon fibers enclosed in the bonding material are also calculated as the bonding material. It is noted here that, although the bonding material may enclose voids, such voids do not contribute to the electronic conductivity and the mechanical properties and are, therefore, not included in the cross-sectional areas of the carbon fibers, the bonding material, and the bonding material enclosing the carbon fibers.

The plane filling rate of the carbon fiber sheet of the present invention refers to a proportion of the constituents (carbon fibers and bonding material) of the carbon fiber sheet with respect to a total area in a layer-forming plane obtained by slicing the carbon fiber sheet in a through-plane direction by planes parallel to one surface at thickness intervals of one-third of the carbon fiber diameter. In other words, the plane filling rate is the area occupancy rate of a portion excluding voids inside the carbon fiber sheet. The details of a filling rate measurement method will be described below.

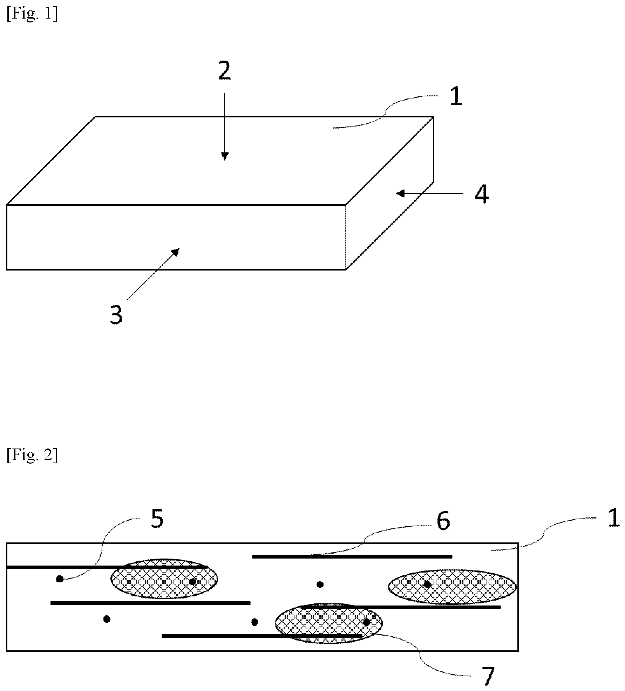

A region occupied by the bonding material having a cross-sectional area larger than 10 times the cross-sectional area of the carbon fibers is calculated by image-processing an X-ray CT image of the carbon fiber sheet. This will now be described referring to FIGs. 1, 4, and 5. In a three-dimensional image of the carbon fiber sheet, one surface 2 of the carbon fiber sheet is defined as flat surface A, one surface 3 perpendicular to the flat surface A is defined as cross-section B, and a surface 4 perpendicular to the cross-section B is defined as cross-section C. Since the three-dimensional image of the carbon fiber sheet obtained by X-ray CT is a laminate of planes, the three-dimensional image of the carbon fiber sheet has cross sections ranging from a cross section B1, which is one surface, to a cross section Bn, which is the opposite surface, with respect to the cross-section B. Similarly, with respect to the cross-section C, the three-dimensional image has cross sections ranging from a cross section C1, which is one surface, to a cross section Cn, which is the opposite surface. Those regions (carbon fibers and bonding material) having an area 10 times or less the cross-sectional area of the carbon fibers in two-dimensional images of the carbon fiber sheet taken from the cross-section B1 to the cross-section Bn are removed from the three-dimensional image of the carbon fiber sheet by image processing. Further, those regions having an area 10 times or less the cross-sectional area of the carbon fibers in two-dimensional images of the cross-section C taken from the cross-section C1 to the cross-section Cn are removed from the three-dimensional image of the carbon fiber sheet by image processing. After removing the regions having an area 10 times or less than the cross-sectional area of the carbon fiber from the three-dimensional image of the carbon fiber sheet by image processing in the above-described manner for the cross-sections B and C, a region remaining after the above-described processing in an image sliced by a plane parallel to the flat surface A is defined as the "region occupied by the bonding material having a cross-sectional area larger than 10 times the cross-sectional area of the carbon fibers". In the calculation of the region occupied by the bonding material having a cross-sectional area larger than 10 times the cross-sectional area of the carbon fibers, a start point and an end point in the thickness direction of the carbon fiber sheet means one surface and the other surface, respectively, and are different from the planes having a 50% filling rate that are used for determining the below-described layer X, layer Y, and layer Z. Further, the carbon fibers enclosed in the bonding material are included in the region occupied by the bonding material; therefore, the proportion of region occupied by the bonding material having a cross-sectional area larger than 10 times the cross-sectional area of the carbon fibers with respect to the entire carbon fiber sheet is different from the blending ratio of the materials. The above-described image analysis is performed using an image analysis software "TRI/3D-VOL-FCS64" (manufactured by Ratoc System Engineering Co., Ltd.).

In the carbon fiber sheet of the present invention, with regard to layers obtained by dividing a section of the carbon fiber sheet 1, which section ranges from a plane 11 that has a 50% filling rate and is closest to one surface 8 to a plane 12 that has a 50% filling rate and is closest to the other surface 9, into three equal parts in a through-plane direction by planes parallel to the one surface 8, when, of the layers close to the respective surfaces, a layer having a higher layer filling rate and a layer having a lower layer filling rate are defined as layer X13 and layer Y15, respectively, and the layer positioned between the layers X13 and Y15 is defined as layer Z14, the layer Z14 has the highest layer filling rate, and a ratio Z/Y of the layer filling rates of the layers Y15 and Z14 is 1.8 or lower.

In the carbon fiber sheet of the present invention, the "50% filling rate" refers to a value obtained by measuring the plane filling rate at thickness intervals of one-third of the carbon fiber diameter from one surface 8 (flat surface A) of the carbon fiber sheet toward the other surface 9, subsequently determining an average value of the thus measured plane filling rates, and then calculating 50% of this average value.

With regard to the above-defined layers X, Y, and Z, by allowing the layer Z to have the highest layer filling rate, a uniform conduction path can be formed in the thickness direction of the carbon fiber sheet and, by controlling the ratio Z/Y of the layer filling rates of the layer Y having the lowest layer filling rate and the layer Z positioned between the layers X and Y to be 1.8 or lower, the contact resistance between both surfaces of the carbon fiber sheet and their adjacent members can be reduced. The ratio Z/Y of the layer filling rates is preferably 1.5 or lower since this is more effective. The "layer filling rate" in this case refers to an average filling rate of all of the planes forming the layer of interest.

When the difference in layer filling rate between the layer Y and the layer Z is 15% or less, a uniform conduction path can be formed in the thickness direction of the carbon fiber sheet, which is preferred. The difference in layer filling rate between the layer Y and the layer Z is more preferably 10% or less since this makes the formation of a uniform conduction path in the thickness direction of the carbon fiber sheet more pronounced.

In the carbon fiber sheet of the present invention, a ratio (open pore volume ratio) of the volume of open pores having a pore size of 0.5 µm or more but less than 10 µm with respect to the volume of open pores having a pore size of 10 µm to 100 µm is preferably 0.02 to 0.20. By controlling the open pore volume ratio to be 0.02 or higher, the mobility of the bonding material is increased, so that the spring property during compression can be improved. By controlling the open pore volume ratio to be 0.20 or lower, the formation of a weak part that acts as an origin of destruction of the bonding material during compression can be inhibited, so that the settling property is improved. The open pore volume ratio is more preferably 0.05 to 0.15 since this makes the above-described effects more pronounced.

In the present invention, the volume of open pores is measured by the mercury intrusion technique described below in the section of Examples.

The carbon fiber sheet of the present invention has a thickness of preferably 50 to 250 µm, more preferably 70 to 180 µm. When the thickness of the carbon fiber sheet is 250 µm or less, more preferably 180 µm or less, the gas diffusibility is increased, and generated water is easily discharged. In addition, this enables to easily reduce the size of a fuel cell as a whole. Meanwhile, when the thickness of the carbon fiber sheet is 50 µm or more, more preferably 70 µm or more, gas diffusion in the in-plane direction inside the carbon fiber sheet occurs efficiently, making it easier to improve the cell performance. The thickness of the carbon fiber sheet is the thickness under pressurization at 1 MPa.

Further, the carbon fiber sheet of the present invention has a spring property during compression of 4 µm or more and a settling property during compression of 10% or less. A gas diffusion electrode using a carbon fiber sheet having these properties in the respective ranges can be particularly preferably used in a fuel cell since it readily absorbs the deformation of members such as an electrolyte membrane, and can be used for an extended period. The carbon fiber sheet more preferably has a spring property during compression of 6 µm or more and a settling property of 5% or less.

In the present invention, the spring property during compression of the carbon fiber sheet refers to the difference between the thickness at 1.5 MPa and the thickness at 0.5 MPa in the process of pressurizing the carbon fiber sheet at 2 MPa and subsequently releasing the pressure. The higher the spring property during compression of the carbon fiber sheet, the superior the recovery strength of the carbon fiber sheet after compression is, which is preferred.

In the present invention, the settling property of the carbon fiber sheet when compressed refers to the rate of decrease in thickness when the carbon fiber sheet is pressurized three times at 2 MPa, between the thickness at 1 MPa in the first pressurization cycle and the thickness at 1 MPa in the third pressurization cycle. The lower the settling property when compressed, the less occurs irreversible deformation due to the pressure cycles and the less likely is the carbon fiber sheet to be broken, which is preferred.

It is a preferred aspect that the carbon fiber sheet of the present invention is composed of a single-layer sheet. When the carbon fiber sheet is composed of a single-layer sheet, the production cost thereof can be reduced as compared to a carbon fiber sheet obtained by laminating plural precursor sheets. From the standpoint of reducing the production cost, it is also a preferred aspect to produce the carbon fiber sheet continuously in a roll-to-roll manner.

### [Method of Producing Carbon Fiber Sheet]

Next, a preferred method of producing the carbon fiber sheet of the present invention will be described.

### [Impregnation of Resin Composition]

For obtaining the carbon fiber sheet of the present invention, one preferred method is to impregnate a carbon fiber porous material with a resin composition serving as the bonding material.

In the present invention, examples of a method that can be used for impregnating a carbon fiber porous material with a resin composition serving as the bonding material include: a method of dipping the carbon fiber porous material in a solution containing the resin composition; a method of applying a solution containing the resin composition to the carbon fiber porous material; and a method of laminating and bonding the carbon fiber porous material onto a film made of the resin composition. Thereamong, the method of dipping the carbon fiber porous material in a solution containing the resin composition is particularly preferably employed because of its excellent productivity. It is noted here that a carbon fiber porous material impregnated with a resin composition serving as the bonding material may be hereinafter referred to as "prepreg".

The resin composition used for the production of a prepreg is preferably a resin composition that is carbonized when baked and becomes the bonding material that is an electrically conductive carbide, and the resin composition, if necessary, contains additives such as the above-described electrically conductive filler and a surfactant. Examples of a resin constituting a resin component in the resin composition used for the production of a prepreg include thermosetting resins, such as phenolic resins, epoxy resins, melamine resins, and furan resins. Thereamong, a phenolic resin is preferably used because of its high carbonization yield.

In the production of a prepreg, the resin composition obtained with the above-described configuration can be used for impregnation as is or, if necessary, various solvents may be incorporated into the resin composition for the purpose of improving the impregnation into the carbon fiber porous material. As the solvents, methanol, ethanol, isopropyl alcohol, and the like can be used.

At the time of impregnation, the carbon fiber porous material is impregnated with the resin composition such that the amount of the resin component is preferably 30 to 400 parts by mass, more preferably 50 to 300 parts by mass, with respect to 100 parts by mass of the carbon fibers in the resulting prepreg. When the amount of the resin component is 30 parts by mass or more with respect to 100 parts by mass of the carbon fibers in the prepreg, the resulting carbon fiber sheet has excellent mechanical properties, electrical conductivity, and thermal conductivity. Meanwhile, when the amount of the resin component is 400 parts by mass or less with respect to 100 parts by mass of the carbon fibers in the prepreg, the resulting carbon fiber sheet has excellent gas diffusivity in both the in-plane direction and the thickness direction.

In the carbon fiber sheet of the present invention, the distribution of the layer filling rate can be adjusted by controlling the monofilament diameter of the carbon fibers constituting the carbon fiber sheet, the density of the carbon fiber sheet, and the distribution of the bonding material in the thickness direction of the carbon fiber sheet. Particularly, a method of controlling the distribution of the bonding material in the thickness direction of the carbon fiber sheet is more preferred. By controlling the distribution of the bonding material in the thickness direction of the carbon fiber sheet, a conduction path formed by the bonding material having a cross-sectional area larger than 10 times the cross-sectional area of the carbon fibers can be easily controlled.

Examples of the method of controlling the distribution of the bonding material in the thickness direction of the carbon fiber sheet include: a method of preparing three prepregs each having an adjusted amount of the resin composition impregnated therein, and subsequently laminating these prepregs; and a method of preparing a single prepreg having a distribution in the amount of adhered resin by using a resin application method that forms a distribution in the amount of adhered resin composition at the time of impregnating the carbon fiber porous material with the resin composition. Between these methods, the method of preparing a single prepreg having a distribution in the amount of adhered resin by using a resin application method that forms a distribution in the amount of adhered resin composition is preferred because it does not require a supply device that supplies plural prepregs at once, which is necessary when obtaining the carbon fiber sheet by a method of laminating prepregs, an increase in the production cost can thus be inhibited. In addition, the method of preparing a single prepreg can easily reduce the thickness of the resulting carbon fiber sheet, and is thus also suitable for adjusting the thickness to be in a preferred range.

Examples of the resin application method that forms a distribution in the amount of adhered resin composition include: adjusting the viscosity of an impregnation liquid by mixing an electrically conductive filler into the resin composition or combining different kinds of solvents at the time of applying the resin composition; and controlling the evaporation rate by adjusting the drying conditions.

Examples of a method of forming open pores having a pore size of 0.5 µm or more but less than 10 µm in the carbon fiber sheet include: appropriately adjusting the amount and the dimensions of the electrically conductive filler mixed into the resin composition; and adjusting a combination of the amount and the dimensions of a pore-forming material that disappears during a carbonization treatment. Among such methods, a method of adjusting a combination of the amount and the dimensions of the electrically conductive filler to be mixed is preferred because it can inhibit an increase in the amount of decomposition gas in a carbonization treatment. The term "dimensions" used herein specifically means the particle size and the aspect ratio.

### [Annealing]

After the formation of a prepreg, the prepreg may be pasted with one another and/or press-annealed prior to carbonization.

Plural prepregs can be pasted together and, in this case, plural prepregs having the same properties may be pasted together, or plural prepregs having different properties may be pasted together. The pasting can also be done by stacking and press-annealing the plural prepregs. However, such pasting may result in the formation of discontinuous planes in the thickness direction, and this may cause internal delamination; therefore, in the present invention, it is more preferred to use only one prepreg and perform press-annealing thereon.

By the press-annealing, the thickness of the resulting carbon fiber sheet and the distribution of the filling rate in the thickness direction can be controlled more precisely.

### [Carbonization]

In a preferred aspect for the production of the carbon fiber sheet of the present invention, after the prepreg is prepared by impregnating the carbon fiber porous material with the resin composition, the prepreg is baked in an inert atmosphere for the purpose of carbonizing the resin composition. For this baking, a batch-type heating furnace or a continuous heating furnace can be used; however, by using a continuous heating furnace, the carbonization rate is increased, so that the production cost can be reduced.

The highest temperature in the baking is preferably in a range of 1,300 to 3,000°C. When the highest temperature is 1,300°C or higher, carbonization of the resin component in the prepreg is accelerated, so that the resulting carbon fiber sheet is provided with excellent electrical conductivity and thermal conductivity. Meanwhile, when the highest temperature is 3,000°C or lower, the operating cost of the heating furnace is reduced.

### [Gas Diffusion Electrode Substrate]

The gas diffusion electrode substrate of the present invention will now be described. It is a preferred aspect that the gas diffusion electrode substrate of the present invention is a gas diffusion electrode substrate composed of the above-described carbon fiber sheet. It is also preferred that the gas diffusion electrode substrate of the present invention be a gas diffusion electrode substrate composed of the above-described carbon fiber sheet on which a hydrophobic treatment has been performed for the purpose of improving the water removability. Further, it is also preferred that the gas diffusion electrode substrate of the present invention be a gas diffusion electrode substrate having a microporous layer on at least one surface of the above-described carbon fiber sheet. It is noted here that the carbon fiber sheet on which a hydrophobic treatment is performed and a microporous layer is then formed may be used as the gas diffusion electrode substrate.

The hydrophobic treatment can be performed by coating or impregnating the carbon fiber sheet with a hydrophobic material and subsequently annealing the carbon fiber material.

As the hydrophobic material, a fluorine-based polymer is preferably used because of its excellent corrosion resistance. Examples of the fluorine-based polymer include polytetrafluoroethylene (PTFE), tetrafluoroethylene-hexafluoropropylene copolymers (FEP), and tetrafluoroethylene-perfluoroalkyl vinyl ether copolymers (PFA).

The microporous layer can be formed by applying a coating liquid to the surface of the carbon fiber sheet. The microporous layer is composed of electrically conductive fine particles and a microporous layer resin that bonds the fine particles. The electrically conductive fine particles are preferably nanocarbon powder of acetylene black or the like, and the microporous layer resin is preferably a fluorinated resin such as PTFE or FPE. Microcarbon powder of graphite or the like may be incorporated as the electrically conductive fine particles for the purpose of improving the electrical conductivity of the microporous layer, and non-conductive fine particles may be incorporated for the purpose of improving the durability of a catalyst.

The coating liquid may contain a dispersion medium such as water or an organic solvent, and may also contain a dispersant such as a surfactant. Water is preferred as the dispersion medium, and it is preferred to use a nonionic surfactant as the dispersant.

The microporous layer can be obtained by applying the coating liquid onto the carbon fiber sheet. As an application method, for example, screen printing, rotary screen printing, spraying, intaglio printing, gravure printing, die coating, bar coating, or blade coating may be employed. After the application, it is preferred to dry the carbon fiber sheet at a temperature of 80°C to 180°C. Further, after the drying, it is also preferred to heat the carbon fiber sheet at a temperature of about 300°C to 400°C, preferably 340°C to 390°C, to melt the hydrophobic material.

An upper limit of the areal weight of the microporous layer is not particularly limited; however, it is preferably 50 g/m² or less, more preferably 30 g/m² or less, still more preferably 25 g/m² or less. A lower limit thereof is preferably 10 g/m² or more, more preferably 14 g/m² or more, still more preferably 16 g/m² or more. When the areal weight of the microporous layer is 10 g/m² or more, the entire surface of the carbon fiber sheet can be covered with the microporous layer, and back-diffusion of generated water is further promoted, so that dry-out can be further inhibited. Meanwhile, when the areal weight of the microporous layer is 50 g/m² or less, the water removability is further improved, so that flooding can be further inhibited.

### [Membrane Electrode Assembly]

The membrane electrode assembly of the present invention includes the above-described carbon fiber sheet or the above-described gas diffusion electrode substrate. As a specific method of producing the membrane electrode assembly of the present invention, the membrane electrode assembly can be formed by bonding the above-described carbon fiber sheet or the above-described gas diffusion electrode substrate to at least one surface of a solid polymer electrolyte membrane having a catalyst layer on both surfaces. The catalyst layer is composed of a layer containing a solid polymer electrolyte and a carbon material of carbon-supported catalyst. As the catalyst, platinum is usually used. In a fuel cell in which a carbon monoxide-containing reformed gas is supplied to the anode side, it is preferred to use platinum and ruthenium as catalysts of the anode side. As the solid polymer electrolyte, it is preferred to use a perfluorosulfonic acid-based polymer material having high protonic conductivity, oxidation resistance, and heat resistance. When a gas diffusion electrode substrate having a microporous layer formed thereon is used, by arranging the microporous layer of the gas diffusion electrode substrate on the catalyst layer side, not only the back-diffusion of generated water is made more likely to occur but also the contact area between the catalyst layer and the gas diffusion electrode substrate is increased, so that the contact electrical resistance can be reduced.

### [Fuel Cell]

The fuel cell of the present invention includes the above-described membrane electrode assembly. That is, the fuel cell of the present invention has separators on both sides of the above-described membrane electrode assembly. In other words, the fuel cell is constructed by arranging separators on both sides of the above-described membrane electrode assembly. Usually, a polymer electrolyte fuel cell is constructed by laminating a plurality of such membrane electrode assemblies each sandwiched by separators from both sides via a gasket. Examples

The carbon fiber sheet of the present invention will now be described concretely by way of Examples.

Regarding the below-described methods of measuring a carbon fiber sheet, when a carbon fiber sheet subjected to a hydrophobic treatment or a carbon fiber sheet used in a gas diffusion electrode substrate having a microporous layer was to be measured, a hydrophobic material or a fluorinated resin in the microporous layer was burned off by heating the carbon fiber sheet at 500°C for 1 hour in an air atmosphere, and carbon powder such as carbon black contained in the microporous layer was subsequently removed by air blowing prior to the measurement.

### <Measurement of Filling Rate>

A carbon fiber sheet (dimensions: 10 mm in length × 5 mm in width) was vertically set in a three-dimensional X-ray CT (product name: TDM1000H-CF, manufactured by Yamato Scientific Co., Ltd.), and scanned 360° using the longitudinal axis of the sheet sample as the rotation axis to produce a three-dimensional image of 2.39 mmΦ (diameter of field of view) × sheet thickness [mm]. In the below-described Examples, images were captured at a tube voltage of 40 kV and a tube current of 60 µA. In this process, the diameter of the field of view was determined such that the slice images constituting the three-dimensional image each had a thickness of one-third of the carbon fiber diameter, and each image was reconstructed to have 1,024 pixels. First, all of the slice images constituting the three-dimensional image were output from the image analysis software provided in the X-ray CT. Next, the thus obtained slice images were each binarized to distinguish the carbon fiber sheet from the background in which the carbon fiber sheet was absent. In this binarization treatment, an image analysis software "TRI/3D-VOL-FCS64" (manufactured by Ratoc System Engineering Co., Ltd.) was used, and binarization was performed taking, as the threshold of brightness, a point at which the degree of separation between two peaks obtained by drawing a gray level histogram of each slice image obtained above was the highest (the Otsu's method). In other words, each image was divided into a low-brightness side (background) and a high-brightness side (constituents of the carbon fiber sheet, such as carbon fibers and bonding material). The proportion of the thus binarized bright-side area with respect to a total area per slice image was defined as filling rate [%]. Next, the filling rate of each slice image was plotted from one surface (hereinafter, may be referred to as "first surface") of the carbon fiber sheet to the other surface (hereinafter, may be referred to as "second surface") to verify the filling rate distribution. In the thus obtained filling rate distribution, an average value of the regions having a filling rate of 0.1% or more was calculated, and the value of 50% of the thus calculated average value was defined as 50% filling rate. In the carbon fiber sheet, after determining a plane that had a 50% filling rate and was closest to the first surface and a plane that had a 50% filling rate and was closest to the second surface, a section sandwiched between these two planes was divided into three equal parts by planes parallel to the first surface to obtain three layers.

In order to evaluate the filling rate of the carbon fiber sheet, the measurement was performed multiple times, and an average value thereof was calculated. In the below-described Examples, six different parts of the carbon fiber sheet were sampled and measured to calculate the average value.

Further, with regard to the layers obtained by dividing the section, which ranged from the plane that had a 50% filling rate and was closest to the first surface constituting one surface to the plane that had a 50% filling rate and was closest to the second surface constituting the other surface, into three equal parts in a through-plane direction by planes parallel to the first surface, a layer having a higher filling rate and a layer having a lower filling rate, which were close to the respective surfaces, were defined as layer X and layer Y, respectively, and the layer positioned between the layers X and Y was defined as layer Z. In the below-described Comparative Examples 1 to 4, with regard to the layers obtained by dividing the above-described section into three equal parts in the above-described manner, the two layers close to the respective surfaces had the same layer filling rate and it is thus impossible to determine which of these layers is the layer X by definition; however, for the sake of convenience, one of the two layers close to the respective surfaces was designated as the layer X and the other was designated as the layer Y.

### <Measurement of Diameter and Cross-Sectional Area of Carbon Fibers>

As for the diameter of the carbon fibers, the carbon fibers on both surfaces of the carbon fiber sheet were photographed at a magnification of × 1,000 under a microscope such as a scanning electron microscope. For each surface, 30 different monofilaments were randomly selected and their diameters were measured, and an average value of a total of 60 monofilaments on both surfaces was calculated. For the measurement of the diameter of each monofilament, the width of the monofilament (the length in the direction perpendicular to the fiber length direction) was measured, and this length was defined as the diameter of the monofilament. As the scanning electron microscope, SU8010 manufactured by Hitachi, Ltd. was used.

The cross-sectional area of each monofilament of the carbon fibers was calculated from the average diameter determined in the above-described manner, assuming that the cross-section was a perfect circle.

### <Measurement of Proportion of Region Occupied by Bonding Material Having Cross-Sectional Area Larger Than 10 Times the Cross-Sectional Area of Carbon Fibers>

The proportion of a region occupied by the bonding material having a cross-sectional area larger than 10 times the cross-sectional area of the carbon fibers was determined by image-processing an X-ray CT image of the carbon fiber sheet. For the binarized image (three-dimensional image) of the carbon fiber sheet that was used in the above-described measurement, in a thickness-wise range of regions of thickness-wise planes having a filling rate of 0.1% or higher as determined in the measurement of plane filling rate, those regions having an area 10 times or less the cross-sectional area of the carbon fibers in two-dimensional images of the carbon fiber sheet taken from the plane B1 to the plane Bn of the cross-section B were removed from the three-dimensional image of the carbon fiber sheet by image processing. Further, those regions having an area 10 times or less the diameter of the carbon fibers in two-dimensional images taken from the plane C1 to the plane Cn of the cross-section C were removed from the three-dimensional image of the carbon fiber sheet by image processing. The filling rate of each plane was calculated for the three-dimensional image of the carbon fiber sheet after the above-described removal. Moreover, the filling rate of each plane in regions having a plane filling rate of 0.1% or higher in the carbon fiber sheet before the removal operation was calculated, and an average value of the proportion (in %) of each layer, which was calculated by dividing the volume of a region occupied by the bonding material having a cross-sectional area larger than 10 times the cross-sectional area of the carbon fibers by the volume of the entire carbon fiber sheet and multiplying the thus obtained value by 100, was defined as the proportion (% by volume) of the region occupied by the bonding material having a cross-sectional area larger than 10 times the cross-sectional area of the carbon fibers in the carbon fiber sheet. The above-described image analysis was performed using an image analysis software "TRI/3D-VOL-FCS64" (manufactured by Ratoc System Engineering Co., Ltd.). It is noted here that six different parts of the carbon fiber sheet were sampled and measured to calculate the average value.

### <Measurement of Open Pore Volume Ratio>

Five measurement samples were prepared by cutting the carbon fiber sheet at a size of 6 cm², and the pore size distribution was determined by a mercury intrusion technique at a measurement pressure of 6 kPa to 123 MPa (pore size: 10 nm to 200 µm). As a measurement device, AUTOPORE 9520 manufactured by Shimadzu Corporation was used.

The pore volume (open pore volume) of each region was determined by, in the integration data obtained by integrating a log differential pore volume distribution graph with respect to the pore size, subtracting the cumulative volume of small pores from the cumulative volume of large pores to be measured. For example, the volume in a region having a pore size of 0.5 µm or more but less than 10 µm was calculated by subtracting the integration data for a pore size of less than 0.5 µm from the integration data for a pore size of less than 10 µm.

By the above-described method, the ratio of the volume of open pores having a pore size of 0.5 µm or more but less than 10 µm with respect to the volume of open pores having a pore size in a range of 10 µm to 100 µm was measured as the open pore volume ratio of the carbon fiber sheet.

### <Measurement of Areal Weight>

The carbon fiber sheet to be measured was cut into a 10-cm square piece to prepare a sample, and the mass [g] of the sample was divided by the area of the sample (0.01 m²) to determine the areal weight.

### <Measurement of Electrical Resistance of Carbon Fiber Sheet>

The electrical resistance under pressure was measured using "AUTOGRAPH" (registered trademark) AGS-X manufactured by Shimadzu Corporation. The carbon fiber sheet cut into a 22.4-mm square piece was set between upper and lower two electric resistance measurement jigs that were attached 20.0 cm apart from each other. The upper electric resistance measurement jig was lowered to apply a load until it reached 1.0 MPa. After the load reached the prescribed value, an electric current of 1.0 ampere was applied using a DC power supply connected to the electric resistance measurement jigs. Thereafter, the voltage value on the digital multi-meter was read after a lapse of 20 seconds, and the value of electrical resistance was calculated from the thus measured value and the measurement area.

### <Measurement of Spring Property and Settling Property of Carbon Fiber Sheet>

The spring property and the settling property of the carbon fiber sheet were measured by a pressure cycle test performed at 0.03 MPa and 2 MPa for the compressed thickness of the carbon fiber sheet. On the upper and lower two planar metal jigs attached to "AUTOGRAPH" (registered trademark) AGS-X manufactured by Shimadzu Corporation, a digital micrometer was set for measuring the distance between the upper and the lower jigs. The carbon fiber sheet cut into a 30-mm square piece was set in the center between the planar metal jigs, and a pressure cycle test was performed at 0.03 MPa and 2 MPa. In this period, the distance between the upper and the lower jigs at each pressure was continuously measured, and the thus measured values were defined as the compressed thickness of the carbon fiber sheet at the respective pressures. The measurement was performed for five pieces of the carbon fiber sheet, and an average value thereof was used in the below-described calculation of the spring property and the settling property of the carbon fiber sheet.

The spring property of the carbon fiber sheet was defined as the difference between the thickness at 1.5 MPa and the thickness at 0.5 MPa during releasing the pressure of the first cycle.

The settling property of the carbon fiber sheet was defined as the rate of decrease in thickness from the thickness at 1 MPa during pressurization of the first cycle to the thickness at 1 MPa during pressurization of the third cycle.

### (Example 1)

A polyacrylonitrile-based carbon fiber "TORAYCA" (registered trademark) T300 (monofilament average diameter: 7 µm) manufactured by Toray Industries, Inc. was cut into short fibers of 12 mm in average length and then dispersed in water to continuously perform papermaking by a wet papermaking method. Further, as a binder, a 10%-by-mass aqueous solution of polyvinyl alcohol was applied and dried onto the thus obtained papermaking substrate to prepare a carbon fiber papermaking substrate having a carbon fiber areal weight of 30.0 g/m². The amount of the applied polyvinyl alcohol was 20 parts by mass with respect to 100 parts by mass of the carbon fiber papermaking substrate.

Next, using a resin composition obtained by mixing a resol-type phenolic resin and a novolak-type phenolic resin at a mass ratio of 1:1 as a thermosetting resin, graphite (average particle size: 5 µm, aspect ratio: 38) as a carbon powder, and a 3:1 (mass ratio) mixture of methanol and butanol as a solvent, these materials were mixed at a ratio of thermosetting resin/carbon powder/solvent = 35 parts by mass/15 parts by mass/50 parts by mass, and the resultant was stirred for 1 minute using an ultrasonic dispersion apparatus to obtain a uniformly dispersed resin composition.

Next, a continuous carbon fiber papermaking substrate was continuously dipped into a resin composition impregnation liquid filling a tank, and sandwiched between two rolls to adjust the amount of adhered resin. In this process, the resulting prepreg was passed through the two rolls with a certain clearance being provided therebetween, whereby the amount of the adhered resin composition as a whole was adjusted. Subsequently, the resultant was heated and dried at a temperature of 100°C for 5 minutes to produce a prepreg. Thereafter, the prepreg was continuously hot-pressed at a temperature of 180°C for a total of 5 minutes while being transported in a stepwise manner and press-heated with hot plates that were arranged parallel to each other. Here, the thickness of the thus hot-pressed prepreg was adjusted by means of the thickness of a spacer such that the carbon fiber sheet to be obtained after carbonization would have the desired thickness.

The thus obtained hot-pressed prepreg was introduced into a heating furnace that was maintained in a nitrogen gas atmosphere and had a maximum temperature of 2,400°C, whereby a carbon fiber sheet was obtained.

For the thus obtained carbon fiber sheet, the layer filling rates of the layers X, Y, and Y, the proportion of a region occupied by the bonding material having a cross-sectional area larger than 10 times the cross-sectional area of the carbon fibers, the open pore volume ratio, the electrical resistance, the spring property, and the settling property were measured in accordance with the above-described measurement methods, and the results thereof were as shown in Table 1.

### (Example 2)

A carbon fiber sheet was obtained, and various evaluations were performed in the same manner as in Example 1, except that graphite (average particle size: 5 µm, aspect ratio: 18) was used as the carbon powder, and a 1:1 (mass ratio) mixture of methanol and butanol was used as the solvent.

### (Example 3)

A carbon fiber sheet was obtained, and various evaluations were performed in the same manner as in Example 1, except that the mixing ratio of thermosetting resin/carbon powder/solvent was changed to 30 parts by mass/20 parts by mass/50 parts by mass.

### (Example 4)

A carbon fiber sheet was obtained, and various evaluations were performed in the same manner as in Example 1, except that the mixing ratio of thermosetting resin/carbon powder/solvent was changed to 42.5 parts by mass/7.5 parts by mass/50 parts by mass.

### (Comparative Example 1)

A carbon fiber sheet was obtained, and various evaluations were performed in the same manner as in Example 1, except that graphite (average particle size: 5 µm, aspect ratio: 17) was used as the carbon powder, and methanol was used alone as the solvent. This carbon fiber sheet was inferior due to its high electrical resistance.

### (Comparative Example 2)

A carbon fiber sheet was obtained, and various evaluations were performed in the same manner as in Comparative Example 1, except that the amount of adhered resin composition was adjusted by widening the clearance between the two rolls such that the carbon fiber sheet had a high areal weight. This carbon fiber sheet was inferior due to its low spring property.

### (Comparative Example 3)

A carbon fiber sheet was obtained, and various evaluations were performed in the same manner as in Comparative Example 1, except that the mixing ratio of thermosetting resin/carbon powder/solvent was changed to 20 parts by mass/30 parts by mass/50 parts by mass. This carbon fiber sheet was inferior due to its high settling property.

### (Comparative Example 4)

A carbon fiber sheet was obtained, and various evaluations were performed in the same manner as in Example 1, except that: two prepregs in which the distribution of the resin composition was biased to the bottom surface were prepared by applying and drying the resin composition onto carbon fiber porous materials from their bottom surface using a roll coater; and that these prepregs, in a state of being stacked with their bottom surfaces facing each other, were continuously hot-pressed at a temperature of 180°C for a total of 5 minutes while being transported in a stepwise manner and press-heated with hot plates that were arranged parallel to each other. This carbon fiber sheet not only had high electrical resistance due to low filling rates of the layers X and Y, but also exhibited insufficient bonding on its surface and poor settling property.

### (Comparative Example 5)

A carbon fiber sheet was obtained, and various evaluations were performed in the same manner as in Example 1, except that graphite (average particle size: 5 µm, aspect ratio: 17) and carbon black (average particle size: 0.01 µm, aspect ratio: 1) were used at 1:1 (mixing ratio) as the carbon powder. This carbon fiber sheet had high electrical resistance and poor settling property due to a low proportion of the region occupied by the bonding material having a cross-sectional area larger than 10 times the cross-sectional area of the carbon fibers.

**[Table 1]**

| | | Unit | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|
| Structure of Carbon Fiber Sheet | Average Particle Size of Electrically Conductive Filler | µm | 5 | 5 | 5 | 5 | 5 | 5 | 5 | 5 | 5/0.01 |
| | Aspect Ratio of Electrically Conductive Filler | - | 38 | 18 | 38 | 38 | 17 | 17 | 17 | 38 | 17/1 |
| | Areal Weight | g/m² | 55 | 55 | 55 | 50 | 55 | 70 | 55 | 55 | 55 |
| | Thickness | µm | 140 | 140 | 140 | 140 | 140 | 140 | 140 | 140 | 140 |
| | Layer Filling Rate of Layer X | % | 23.7 | 23.5 | 22.7 | 25.2 | 27.9 | 37.2 | 27.9 | 19.4 | 24.5 |
| | Layer Filling Rate of Layer Z | % | 31.5 | 31.0 | 34.9 | 28.1 | 23.5 | 26.9 | 23.5 | 40.4 | 30.6 |
| | Layer Filling Rate of Layer Y | % | 23.6 | 23.2 | 22.1 | 24.7 | 27.9 | 37.2 | 27.9 | 19.0 | 24.3 |
| | Ratio of Layer Filling Rates of Layer Z and Y (Z/Y) | - | 1.3 | 1.3 | 1.6 | 1.1 | 0.8 | 0.7 | 0.8 | 2.1 | 1.3 |
| | Difference in Layer Filling Rate between the Layer Z and the Layer Y (Z-Y) | % | 7.9 | 7.8 | 12.8 | 3.4 | -4.4 | -10.3 | -4.4 | 21.4 | 6.3 |
| | Proportion of a Region Occupied by the Bonding Material having a Cross-sectional Area Larger Than 10 Times the Cross-sectional Area of the Carbon Fibers | Volume % | 73 | 68 | 74 | 78 | 67 | 83 | 72 | 71 | 34 |
| | Open Pore Volume Ratio | - | 0.08 | 0.05 | 0.16 | 0.02 | 0.02 | 0.02 | 0.28 | 0.07 | 0.01 |
| Evaluation Results | Electrical Resistance | mΩ ·cm² | 5.4 | 5.9 | 5.1 | 6.4 | 6.7 | 5.9 | 4.9 | 5.9 | 7.3 |
| | Spring Property | µm | 7.6 | 8.7 | 8.5 | 3.8 | 8.8 | 3.4 | 7.9 | 8.6 | 9.3 |
| | Settling Property | % | 2 | 3 | 7 | 1 | 3 | 1 | 13 | 11 | 15 |

### Description of Symbols

1: Carbon fiber sheet
2: One surface (flat surface A) of carbon fiber sheet
3: Surface (cross-section B) viewed from side perpendicular to flat surface A
4: Surface (cross-section C) viewed from side perpendicular to cross-section B
5: Cross-section of carbon fiber oriented perpendicular to cross-section B
6: Carbon fiber oriented perpendicular to cross-section C
7: Bonding material having cross-sectional area 10 times the cross-sectional area of carbon fibers
8: One surface of carbon fiber sheet
9: The other surface of carbon fiber sheet
10: Region constituted by planes having filling rate of less than 50%
11: Plane having 50% filling rate and being closest to one surface
12: Plane having 50% filling rate and being closest to the other surface
13: Layer X
14: Layer Z
15: Layer Y
16: Cross-section B1
17: Cross-section Bn
18: Cross-section C1
19: Cross-section Cn

### Industrial Applicability

The present invention can be applied to electrochemical units using porous electrodes, such as fuel cells, water hydrolysis cells, redox flow batteries, and air batteries. Particularly, the present invention can be preferably applied to polymer electrolyte fuel cells.

## Claims

1. A carbon fiber sheet, comprising carbon fibers and a bonding material, wherein
a proportion of a region occupied by the bonding material having a cross-sectional area larger than 10 times the cross-sectional area of the carbon fibers is 40% by volume or more of the volume of the entire carbon fiber sheet,
in a section ranging from a plane that has a 50% filling rate and is closest to one surface to a plane that has a 50% filling rate and is closest to the other surface, with regard to layers obtained by dividing the carbon fiber sheet into three equal parts in a through-plane direction by planes parallel to the one surface, when, of the layers close to the respective surfaces, a layer having a higher layer filling rate and a layer having a lower layer filling rate are defined as layer X and layer Y, respectively, while the layer positioned between the layers X and Y is defined as layer Z, the layer Z has the highest layer filling rate and a ratio Z/Y of the layer filling rates of the layers Y and Z is 1.8 or lower,
the 50% filling rate is a value obtained by measuring the plane filling rate at thickness intervals of one-third of the carbon fiber diameter from one surface of the carbon fiber sheet toward the other surface, subsequently determining an average value of the thus measured plane filling rates, and then calculating 50% of this average value, and
the layer filling rate is an average filling rate of planes forming each layer,
wherein the proportion of a region occupied by the bonding material having a cross-sectional area larger than 10 times the cross-sectional area of the carbon fibers and the filling rate are measured as described in the description.

2. The carbon fiber sheet according to claim 1, wherein the difference in layer filling rate between the layer Y and the layer Z is 15% or less.

3. The carbon fiber sheet according to claim 1, having an open pore volume ratio, which is defined as a ratio of the volume of open pores having a pore size of 0.5 µm or more but less than 10 µm with respect to the volume of open pores having a pore size of 10 µm to 100 µm, of 0.02 to 0.20, wherein the volume of open pores is measured by a mercury intrusion technique at a measurement pressure of 6 kPa to 123 MPa (pore size: 10 nm to 200 µm).

4. The carbon fiber sheet according to claim 1, having a spring property during compression of 4 µm or more and a settling property during compression of 10% or less, wherein the spring property and the settling property are measured as described in the description.

5. The carbon fiber sheet according to claim 1, wherein the bonding material contains an electrically conductive filler having an aspect ratio of 20 to 60 and an average particle size of 2 µm to 8 µm.

6. The carbon fiber sheet according to claim 1, consisting of a single-layer sheet.

7. The carbon fiber sheet according to claim 1, containing only carbon fibers as a fibrous material.

8. A gas diffusion electrode substrate, comprising the carbon fiber sheet according to claim 1.

9. The gas diffusion electrode substrate according to claim 8, wherein a hydrophobic treatment has been performed on the carbon fiber sheet .

10. The gas diffusion electrode substrate according to claim 8, wherein a microporous layer is formed on at least one surface of the carbon fiber sheet according to claim 1.

11. A membrane electrode assembly, comprising the carbon fiber sheet according to claim 1 or the gas diffusion electrode substrate according to claim 8.

12. A fuel cell, comprising the membrane electrode assembly according to claim 11.

## Patentansprüche

1. Kohlenstofffaserlage, umfassend Kohlenstofffasern und ein Bindematerial, wobei
ein Anteil eines Bereichs, der von dem Bindematerial mit einer Querschnittsfläche, die größer als das 10-fache der Querschnittsfläche der Kohlenstofffasern ist, eingenommen wird, 40 Vol.-% oder mehr des Volumens der gesamten Kohlenstofffaserlage beträgt,
in einem Abschnitt, der von einer Ebene, die eine Füllrate von 50 % aufweist und einer Oberfläche am nächsten liegt, bis zu einer Ebene, die eine Füllrate von 50 % aufweist und der anderen Oberfläche am nächsten liegt, reicht, in Bezug auf Schichten, die erhalten werden, indem die Kohlenstofffaserlage in einer Richtung quer zur Ebene in drei gleiche Teile durch Ebenen parallel zu der einen Oberfläche unterteilt werden, wenn von den Schichten in der Nähe der jeweiligen Oberflächen eine Schicht mit einer höheren Schichtfüllrate und eine Schicht mit einer niedrigeren Schichtfüllrate als Schicht X bzw. Schicht Y definiert sind, während die zwischen den Schichten X und Y positionierte Schicht als Schicht Z definiert ist, die Schicht Z die höchste Schichtfüllrate aufweist und ein Verhältnis Z/Y der Schichtfüllraten der Schichten Y und Z 1,8 oder weniger beträgt,
die Füllrate von 50 % ein Wert ist, der durch Messen der Ebenen-Füllrate in Dickenintervallen von einem Drittel des Kohlenstofffaserdurchmessers von einer Oberläche der Kohlenstofffaserlage in Richtung der anderen Oberfläche, anschließendes Erfassen eines Durchschnittswertes der so gemessenen Ebenen-Füllraten und anschließendes Berechnen von 50 % dieses Durchschnittswertes erhalten wird, und
die Schichtfüllrate eine durchschnittliche Füllrate von Ebenen ist, die jede Schicht bilden,
wobei der Anteil eines Bereichs, der von dem Bindematerial mit einer Querschnittsfläche, die größer als das 10-fache der Querschnittsfläche der Kohlenstofffasern ist, eingenommen ist, und die Füllrate wie in der Beschreibung beschrieben gemessen wird.

2. Kohlenstofffaserlage gemäß Anspruch 1, wobei die Differenz der Schichtfüllrate zwischen der Schicht Y und der Schicht Z 15 % oder weniger beträgt.

3. Kohlenstofffaserlage gemäß Anspruch 1, mit einem Volumenverhältnis offener Poren, das als ein Verhältnis des Volumens offener Poren mit einer Porengröße von 0,5 µm oder mehr, aber weniger als 10 µm in Bezug auf das Volumen offener Poren mit einer Porengröße von 10 µm bis 100 µm definiert ist, von 0,02 bis 0,20, wobei das Volumen offener Poren durch eine Quecksilberintrusionstechnik bei einem Messdruck von 6 kPa bis 123 MPa (Porengröße: 10 nm bis 200 µm) gemessen wird.

4. Kohlenstofffaserlage gemäß Anspruch 1, mit einer Federeigenschaft während der Kompression von 4 µm oder mehr und einer Absetzeigenschaft während der Kompression von 10 % oder weniger, wobei die Federeigenschaft und die Absetzeigenschaft wie in der Beschreibung beschrieben gemessen werden.

5. Kohlenstofffaserlage gemäß Anspruch 1, wobei das Bindematerial einen elektrisch leitfähigen Füllstoff mit einem Seitenverhältnis von 20 bis 60 und einer durchschnittlichen Partikelgröße von 2 µm bis 8 µm enthält.

6. Kohlenstofffaserlage gemäß Anspruch 1, bestehend aus einer einschichtigen Lage.

7. Kohlenstofffaserlage gemäß Anspruch 1, die nur Kohlenstofffasern als Fasermaterial enthält.

8. Gasdiffusionselektrodensubstrat, umfassend die Kohlenstofffaserlage gemäß Anspruch 1.

9. Gasdiffusionselektrodensubstrat gemäß Anspruch 8, wobei eine hydrophobe Behandlung an der Kohlenstofffaserlage durchgeführt wurde.

10. Gasdiffusionselektrodensubstrat gemäß Anspruch 8, wobei eine mikroporöse Schicht auf mindestens einer Fläche der Kohlenstofffaserlage gemäß Anspruch 1 gebildet ist.

11. Membranelektrodenanordnung, umfassend die Kohlenstofffaserlage gemäß Anspruch 1 oder das Gasdiffusionselektrodensubstrat gemäß Anspruch 8.

12. Brennstoffzelle, umfassend die Membranelektrodenanordnung gemäß Anspruch 11.

## Revendications

1. Feuille de fibres de carbone, comprenant des fibres de carbone et un matériau de liaison, dans laquelle
une proportion d'une région occupée par le matériau de liaison ayant une surface de section transversale supérieure à 10 fois la surface de section transversale des fibres de carbone est de 40 % en volume ou plus du volume de la feuille de fibres de carbone entière,
dans une section allant d'un plan qui a un taux de remplissage de 50 % et est le plus proche d'une surface à un plan qui a un taux de remplissage de 50 % et est le plus proche de l'autre surface, en ce qui concerne les couches obtenues en divisant la feuille de fibres de carbone en trois parties égales dans une direction à travers le plan par des plans parallèles à la surface, lorsque, parmi les couches proches des surfaces respectives, une couche ayant un taux de remplissage de couche plus élevé et une couche ayant un taux de remplissage de couche plus faible sont définies comme couche X et couche Y, respectivement, tandis que la couche positionnée entre les couches X et Y est définie comme couche Z, la couche Z a le taux de remplissage de couche le plus élevé et un rapport Z/Y des taux de remplissage de couche des couches Y et Z est de 1,8 ou moins,
le taux de remplissage de 50 % est une valeur obtenue en mesurant le taux de remplissage de plan à des intervalles d'épaisseur d'un tiers du diamètre des fibres de carbone d'une surface de la feuille de fibres de carbone vers l'autre surface, en déterminant ensuite une valeur moyenne des taux de remplissage de plan ainsi mesurés, et en calculant ensuite 50 % de cette valeur moyenne, et
le taux de remplissage de couche est un taux de remplissage moyen des plans formant chaque couche,
dans laquelle la proportion d'une région occupée par le matériau de liaison ayant une surface de section transversale supérieure à 10 fois la surface de section transversale des fibres de carbone et le taux de remplissage sont mesurés comme décrit dans la description.

2. Feuille de fibres de carbone selon la revendication 1, dans laquelle la différence de taux de remplissage de couche entre la couche Y et la couche Z est de 15 % ou moins.

3. Feuille de fibres de carbone selon la revendication 1, ayant un rapport volumique de pores ouverts, qui est défini comme un rapport du volume de pores ouverts ayant une taille de pore de 0,5 µm ou plus mais inférieure à 10 µm par rapport au volume de pores ouverts ayant une taille de pore de 10 µm à 100 µm, de 0,02 à 0,20, dans laquelle le volume de pores ouverts est mesuré par une technique d'intrusion de mercure à une pression de mesure de 6 kPa à 123 MPa (taille de pore : 10 nm à 200 µm).

4. Feuille de fibres de carbone selon la revendication 1, ayant une propriété de ressort pendant la compression de 4 µm ou plus et une propriété de sédimentation pendant la compression de 10 % ou moins, dans laquelle la propriété de ressort et la propriété de sédimentation sont mesurées comme décrit dans la description.

5. Feuille de fibres de carbone selon la revendication 1, dans laquelle le matériau de liaison contient une charge électriquement conductrice ayant un rapport d'aspect de 20 à 60 et une taille de particule moyenne de 2 µm à 8 µm.

6. Feuille de fibres de carbone selon la revendication 1, constituée d'une feuille monocouche.

7. Feuille de fibres de carbone selon la revendication 1, contenant uniquement des fibres de carbone en tant que matériau fibreux.

8. Substrat d'électrode à diffusion de gaz, comprenant la feuille de fibres de carbone selon la revendication 1.

9. Substrat d'électrode à diffusion de gaz selon la revendication 8, dans lequel un traitement hydrophobe a été effectué sur la feuille de fibres de carbone.

10. Substrat d'électrode à diffusion de gaz selon la revendication 8, dans lequel une couche microporeuse est formée sur au moins une surface de la feuille de fibres de carbone selon la revendication 1.

11. Ensemble membrane-électrode, comprenant la feuille de fibres de carbone selon la revendication 1 ou le substrat d'électrode à diffusion de gaz selon la revendication 8.

12. Pile à combustible, comprenant l'ensemble membrane-électrode selon la revendication 11.
